# EUROPEAN PATENT APPLICATION

(11) **EP 2 090 368 A1**
(43) Date of publication of application: **19.08.2009**
(21) Application number: 08002646.1
(22) Date of filing: 13.02.2008
(51) Int. Cl.: B05B 1/18, B05B 1/30, B05B 12/00, F16K 11/06, E03C 1/05

(54) **Improved showerhead with delivery mode switch**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

Showerhead (1) comprising a body (2) delimiting a distribution chamber (3) provided with a water inlet and at least two distinct outlets (4, 5), a shutter (9) axially sliding between a first seat (S1) of the distribution chamber (3), in which it interrupts a fluid path towards a first outlet (4), and a second seat (S2) of the chamber (3), in which it interrupts a fluid path towards a second outlet (5). The showerhead comprises an electric motor (10) provided with a shaft, a guided slide (15) fixed to the shutter (9) and coupled to the shaft of the motor, the coupling between the slide and the shutter being of the screw (11) and female screw (12) type, for converting a rotation of the shaft into an axial sliding of the shutter (9).

## Description

### Field of application

The present invention relates to a showerhead comprising a body delimiting a distribution chamber having a water inlet and at least two separate outlets, and a shutter axially sliding between a first seat of the distribution chamber, in which it interrupts a fluid path towards a first outlet, and a second seat of the chamber, in which it interrupts a fluid path towards a second outlet.

More in particular, the invention relates to a showerhead of the type described above indicated for selecting a delivery mode of the flow.

### Prior art

As well known to a man skilled in the art, currently there are showerheads for domestic use provided with controls for selecting the water delivery mode, for example into a peripheral rain jet or into a central cohesive jet.

In particular, these showerheads comprise a body delimiting a water distribution chamber having a water inlet and at least two distinct outlets, and a diffuser with at least two distinct delivery zones, each in fluid communication with a respective outlet of the body, for delivering water at different modes.

Selection of the delivery mode is performed by means of a shutter, arrangable in the distribution chamber for selectively blocking one of the outlets.

In particular, the shutter slides axially between a first seat of the distribution chamber, in which it interrupts a fluid path towards a first outlet, and a second seat of the chamber, in which it interrupts a fluid path towards a second outlet.

The shutter controls are generally buttons arranged on the handle of the showerhead and they control mechanical operation means of the shutter, to move the shutter from the first seat to the second and vice versa.

Such controls suffer the considerable drawback of being particularly cumbersome given that they are required to transfer a pressure applied manually onto the button to the operation means, in order to move the shutter in the distribution chamber. In particular, the buttons must be dimensioned in such a manner to allow simple and immediate pressing by the operator using a finger.

The technical problem on which the present invention is based is that of improving, simplifying and enhancing the functionality of the selection operations of a showerhead, overcoming the drawbacks still affecting showerheads according to the prior art.

### Summary of the invention

The solution idea on which the present invention is based is that of mounting an electric motor onboard a showerhead and converting the rotation movement of an electric motor shaft in an axial sliding of the shutter between a first seat of the distribution chamber, in which it interrupts a fluid path towards a first outlet, and a second seat of the chamber, in which it interrupts a fluid path towards a second outlet.

According to such solution idea, the technical problem is overcome by a showerhead comprising
- an electric motor provided with a shaft,
- a guided slide fixed to the shutter and coupled to the motor shaft,
   the coupling between the slide and the shutter being of the screw and female screw type, to convert a shaft rotation into a sliding movement of the shutter.
   Advantageously, the showerhead according to the present invention allows to select the delivery mode electrically and by applying slight pressure on an electric motor operation button.
   Advantageously, the operation button could be very small given that just a slight pressure is required to operate the electric motor.
   Advantageously, the showerhead according to the present invention is small given that the electric motor is mounted onto the shaft in the guided slide and transfers the rotation movement of the shaft directly onto the slide.
   Characteristics and advantages of the showerhead according to the present invention shall be clear from the description, outlined hereinafter, of one of its embodiments, provided for indicative and non-limiting purposes with reference to the attached drawings.

### Brief description of the attached drawings

- Figure 1a represents an operation diagram of a showerhead according to the present invention, at one step of its operation.
- Figure 1b represents an operation diagram of a showerhead according to the present invention, at another step of its operation.
- Figure 2 shows a perspective and partially sectional view of a showerhead according to the present invention.
- Figure 3 shows a different perspective view of the showerhead of figure 2.
- Figure 4 shows a side and sectional view of a casing of the showerhead according to the present invention.

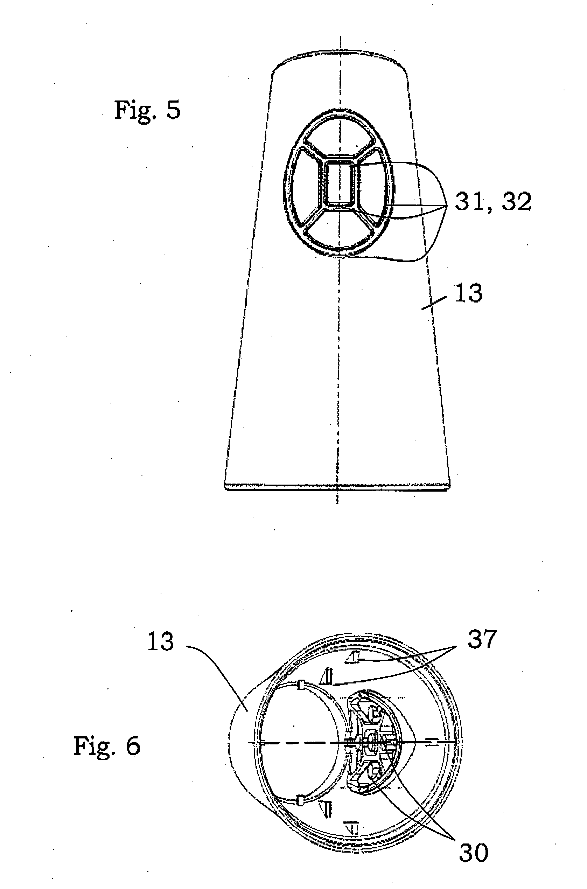

- Figure 5 shows a front view of the casing of figure 4.
- Figure 6 shows a bottom view of the casing of figure 4.
- Figure 7 shows a top view of the casing of figure 4.
- Figure 8 shows a detail of the sectional view of figure 4.
- Figure 9 shows another perspective and a partially sectional view of the showerhead according to the present invention.
- Figure 10 shows a perspective view of the showerhead according to the present invention.
- Figure 11a and 11b show perspective views of a detail of the showerhead according to the present invention.

### Detailed description

Referring to the attached figures, a showerhead for selecting the water delivery mode, for example a rain peripheral jet or central cohesive jet, is schematically represented and generally indicated by 1.

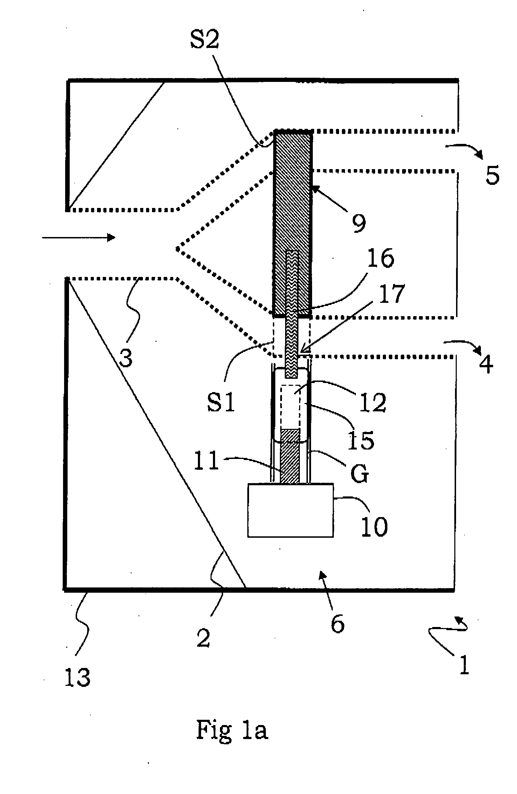

As schematically represented in figure 1a, the showerhead 1 comprises a body 2 delimiting a water distribution chamber 3 having a water inlet and at least two distinct outlets 4, 5.

In particular, the showerhead 1 comprises a diffuser with at least two distinct delivery zones, each in fluid communication with a respective outlet 4, 5 of the body 2, for delivering water at different modes.

The diffuser, not represented in figure 1a, given that it is a standard diffuser, comprises a central nozzle associated to a first delivery zone for the delivery of a cohesive jet and plurality of peripheral nozzles associated to a second delivery zone and distributed to form a crown around the central nozzle, for the delivery of a peripheral jet.

The distribution chamber 3 can also end with three or more distinct outlets, in fluid communication with respective delivery zones of the diffuser, corresponding to various delivery modes.

Furthermore, the showerhead 1 comprises a shutter 9, arranged in the distribution chamber 3 to selectively brake a fluid path towards one of the outlets 4, 5. In particular, the shutter 9 is axially slidable between a first seat S1 of the distribution chamber 3, in which it interrupts the fluid path from the inlet of the body 2 towards a first outlet 4, and a second seat S2 of the chamber, in which it interrupts a path fluid from the inlet towards a second outlet 5. In other words, the shutter is slidable along a connecting axis of the seats S1 and S2, corresponding to the axis of the shutter 9 itself.

More in particular, when the shutter 9 is in the first seat S1, the diffuser delivers water in a cohesive mode, through the first delivery zone of the diffuser. On the other hand, when the shutter 9 is in the second seat S2, the diffuser delivers water in a rain mode, through the second delivery zone of the diffuser.

According to the present invention, the showerhead comprises an electric motor 10 provided with a shaft, and a guided slide 15, fixed to shutter 9 and coupled with the motor shaft.

In particular, the coupling between the guided slide 15 and the shutter 9 is of the screw 11 and female screw 12 type, for converting a shaft rotation into an axial sliding of the shutter 9.

In a preferred embodiment of the present invention, the screw 11 is made up of a threading of the shaft and the female screw 12 is made inside a thickness of the guided slide 15. According to this embodiment, in the subsequent description, the shaft is also indicated as a threaded shaft 11.

Obviously, the screw 11 and female screw 12 type of coupling can also be made in a different manner, for example by associating the female screw 12 to the motor shaft and the screw 11 to the guided slide 15.

A rotation of the shaft 11 in the female screw 12 triggers the sliding of the guide slide 15 in a guide G fixed to the body 2 and a corresponding axial sliding of the shutter 9 between the seats S1, S2 of the distribution chamber 3.

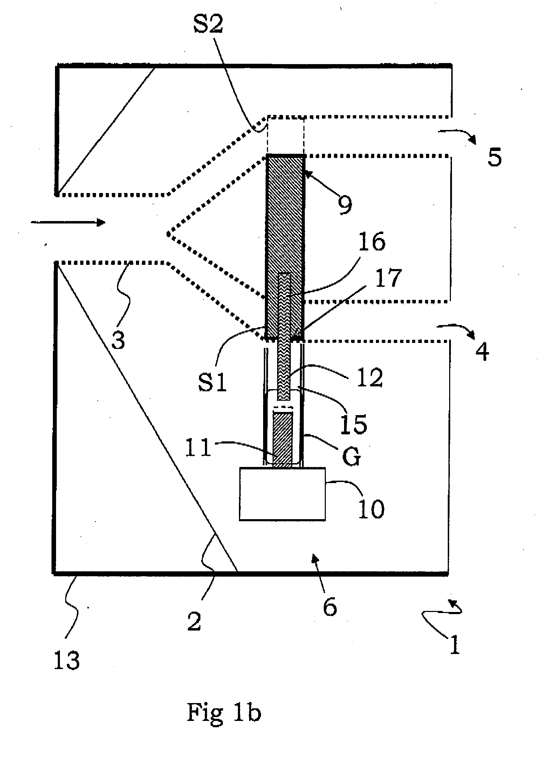

In particular, when the electric motor 10 is running, the threaded shaft 11 rotates following a preset direction, for example clockwise, screwing into the female screw 12. Consequently, the guided slide 15 axially slides in the guide G, until it reaches a minimum travel position with respect to the threaded shaft 11, as illustrated schematically in figure 1b.

At such minimum travel position, the shutter is positioned in the first seat S1.

It is provided for that a control on the showerhead 1 operates the electric motor 10 to rotate the threaded shaft for a preset number of rotations, substantially corresponding to a preset travel of the guided slide 15. Substantially, such preset travel is equivalent to the axial distance between the second seat S2 and the first seat S1 in the distribution chamber 3.

When the threaded shaft 11 is operated in the direction opposite to the preset one, for example anticlockwise, it unscrews from the female screw 12 and the guided slide 15 slides in the guide G until it reaches a maximum travel position with respect to the threaded shaft 11, as illustrated schematically in figure 1a.

In particular, at the maximum travel position of the guided slide 15, the shutter 9 is positioned in the first seat S1.

Also in this case, it is provided that the control on the showerhead 1 operates the electric motor 10 to rotate the shaft 11 for a preset number of rotations, in particular, preventing the shaft 11 from projecting from the female screw 12.

In an embodiment of the present invention, the showerhead comprises only one operating control for the electric motor 10 which operates the electric motor 10, in an alternating manner, towards one direction of rotation or the other.

The showerhead 1 comprises a casing 13 fitted sealingly onto the body 2 to delimit a hydraulically insulated seat 6 for accommodating the electric motor 10.

As clear from the following description, the hydraulically insulated seat 6 host the electric motor 10 and a plurality of electric means for operating the shutter 9.

Furthermore, the showerhead 1 according to the present invention comprises a rod 16 arranged between the shutter 9 and the guided slide 15, axially slidable through the access hole 17 up to the distribution chamber 3.

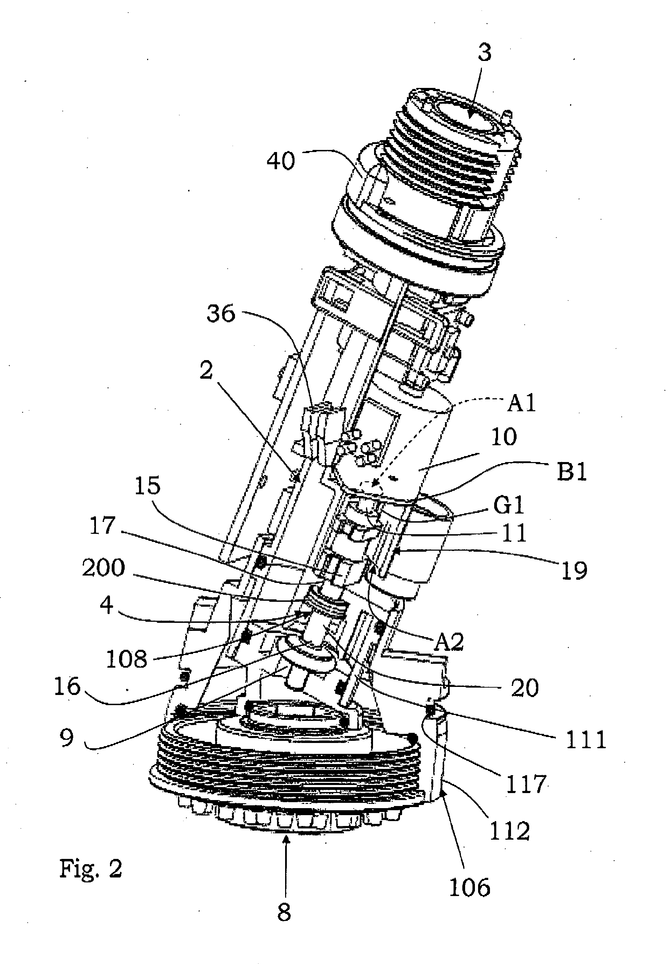

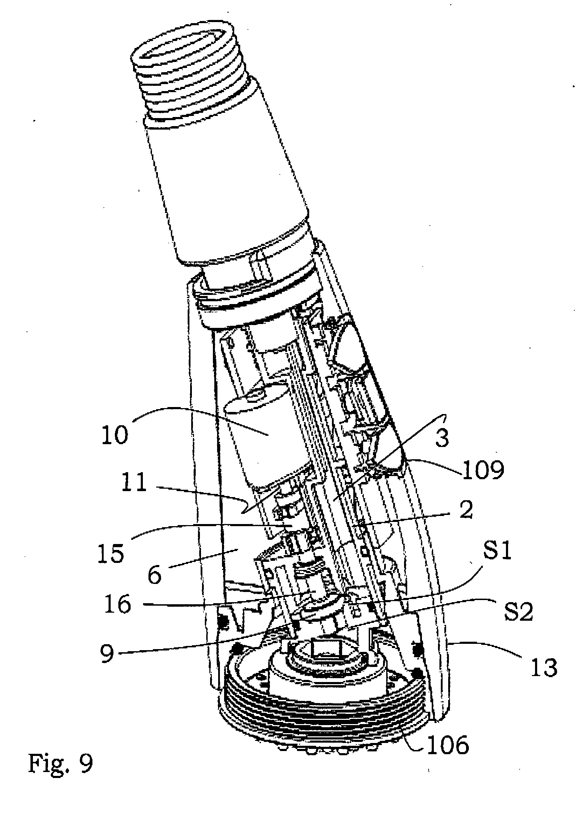

The rod 16 is fixed onto the shutter 9 or it is integrated into a single piece with the same and it has a diameter substantially equivalent to a diameter of the access hole 17. As represented in figure 2, a gasket 200 is provided sealed in a seat 108 substantially concentric to the access hole 17, to hydraulically insulate the distribution chamber 3 from the hydraulically insulated seat 6 (represented in Fig.9).

The interposition of the rod 16 between the guided slide 15 and the shutter 9 allows to transmit the sliding movement of the guided slide 15, which occurs in the hydraulically insulated seat 6, to the shutter 9, which is located in the distribution chamber 3, guaranteeing a perfect insulation between the two seats through the gasket 200.

The guide G for the guided slide 15 can be integrated into a single piece with the body 2 or be mounted onto it.

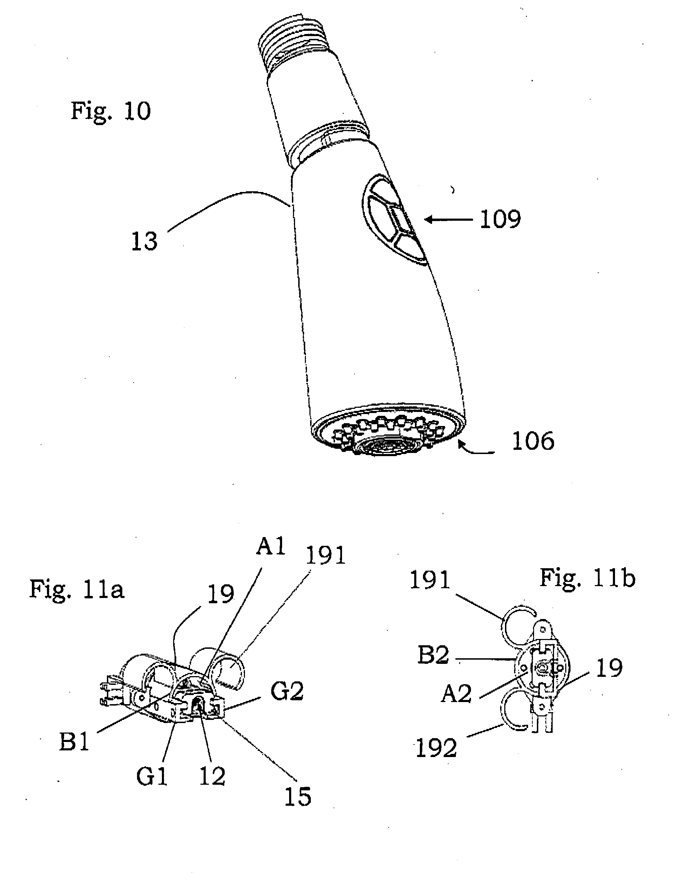

In particular, in a preferred embodiment of the present invention, a framework 19 of the electric motor 10 is fixed into the hydraulically sealed seat 6. Such support 19 is hollow and provided internally with a pair of sliding guides G1, G2, in which the guided slides 15 are engaged in a sliding manner (Fig. 11a and 11b).

Such framework 19 comprises a support base B1 for the electric motor 10, provided with an opening A1 through which the threaded shaft 11 is screwed into the female screw 12 of the guided slide 15. In other words, the electric motor 10 is fixed to the support base B1 of the framework 19, externally to it, and the threaded shaft 11 protrudes into the cavity delimited by the framework 19, inside which it is engaged with the female screw 12 of the guided slide 15.

A base B2 of the framework 19, oppositely positioned to the support base B1, comprises an opening A2, through which the rod 16 and the guided slide 15 move.

The showerhead thus conceived is easy to assemble given that the electric motor 10, the guided slide 15 and the rod 16 can be mounted one onto the other, separately from the body 2, and then fixed onto it, inserting the rod 16 sliding through the access hole 17 and lastly fixing the framework 19 onto the shutter 9.

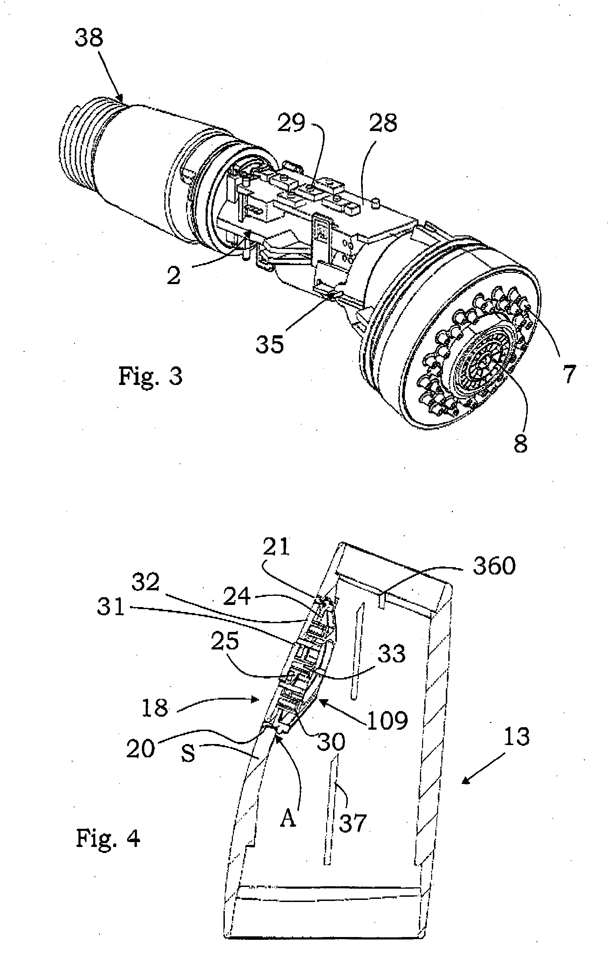

As schematically illustrated in figure 3, the showerhead 1 comprises an electronic board 28 connected to the electric motor 10 and located in the hydraulically insulated seat 6. Preferably, the framework 19 for the electric motor 10 and the electronic board 28 are both fixed onto the body 2, with the body 2 substantially interposed between them.

The electronic board 28 comprises at least a pressure sensor 29 for operating the threaded shaft 11.

Advantageously, the showerhead 1 according to the present invention is easy to assemble and particularly efficient at insulating the electronic components from the water delivered and also from the humidity therein, for example, in a kitchen or in a bathroom.

As a matter of fact, the casing 13 is fitted watertight on the body 2 and on the diffuser 106 delimiting, with the body 2 and the diffuser 106, the hydraulically insulated and watertight seat 6.

The casing 13 adheres to a portion 112 of the diffuser 106 comprising an annular seat which accommodates a gasket 117, fitted sealingly between the casing 13 and the diffuser 106, The casing 13 does not interfere with the delivery zones 7, 8 of the diffuser 106 but prevents the water delivered therefrom from penetrating into the hydraulically insulated seat 6.

Preferably, the casing 13 is hollow and substantially cylindrical or frusto-conical shaped and it is fitted onto a portion 112 of the diffuser 106, also cylindrical-shaped and with a diameter substantially equivalent to a diameter of the casing 13. Furthermore, the casing 13 is fitted onto a portion of the body 2 with a bushing 40 inserted watertight between them.

An opening 18 is made on the casing 13 for access into the hydraulically sealed seat 6 and a keypad 109 is fitted for watertight closure of the opening 18.

In particular, the opening 18 is peripherally provided with an abutment recess 20 for accommodating and supporting the keypad 109 in such a manner to be substantially levelled with the external surface of the casing 13. In practice, the keypad 109 is inserted to cover the opening 18 with an edge supported by the abutment recess 20.

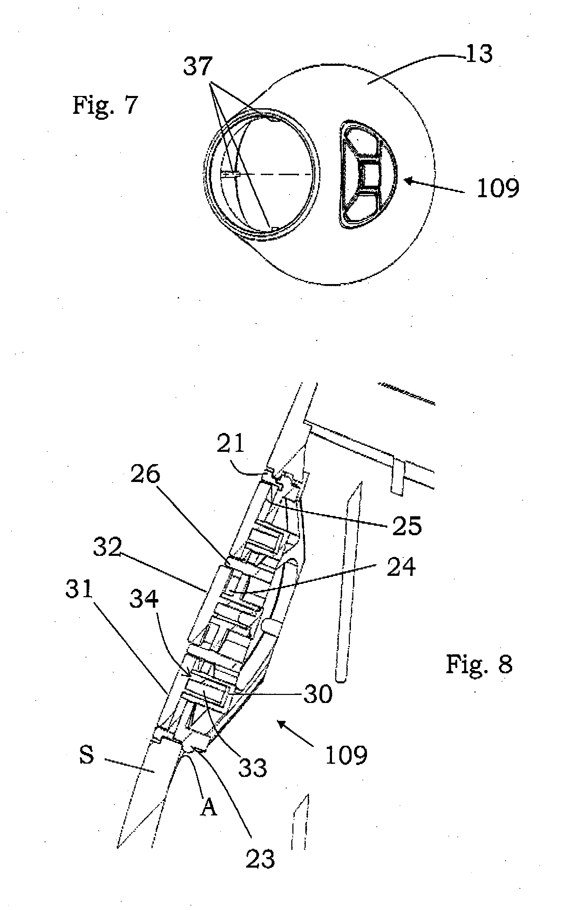

The keypad 109 is provided with a gasket 23 represented in figure 8, integrated into a single piece with the keypad 19, which adheres to the inner part of the casing 13 and seals it. The edge and the gasket 23 are shaped in a thickness of the keypad 109 and delimit, in such thickness, an annular seat snap-fitted into the opening of the casing 13.

The keypad 109 comprises at least one elastically deformable surface portion 24 for operating the electric motor 10.

In particular, the electronic board 28 comprises at least one pressure sensor 29 which can be operated by a corresponding elastically deformable surface portion 24, 25. The electronic board 28 can also comprise a plurality of pressure sensors for enabling further electric operation means provided, for example, for the adjustment of the flow rates and/or temperature.

In such case, the keypad 109 comprises one or more rigid ribs 26 for separating two or more elastic surface portions, deformable elastically and separately 24, 25.

Substantially, the keypad 109 is positioned on the electronic board 28 in such a manner that the pressure sensors correspond to respective elastically deformable surface portions of the keypad.

In particular, each elastically deformable surface portion 24 of the keypad 19 comprises a respective socket 30 with a bottom substantially at contact with the pressure sensor 29.

The gasket 23, the rigid ribs 26, the elastically deformable portions 24, 25 and the socket 30 are integrated into a single piece.

In particular, the gasket 23 and the elastically deformable surface portions 24, 25 are made of rubber. Advantageously, the gasket 23 is made of deformable rubber in a way to be force fitted through the opening 18 and provide a sealing inside the casing 13.

The rigid ribs 26 and the socket 30 are made of polypropylene and glass fibre. Also the edge of the keypad which remains levelled with the opening 18 is made of polypropylene and glass fibre.

Advantageously, the edge made of polypropylene and glass fibre prevents the formation of mould. Preferably the glass fibre makes up for 30% and it avoids the formation of mould, alongside providing a considerable resistance against chemical agents due to, for example, use of detergents and the like.

A man skilled in the art is capable of realising that various modifications and variants can be performed on the present invention without departing from the scope of the same.

For example, in an embodiment of the present invention, the electronic board 28 is also connected to the electric operation means located externally to the showerhead, under the sink or in a wall recessed and hydraulically insulated seat. In this alternative embodiment, the cabling between the electronic board held in the accommodation seat 6 and the external showerhead operation means is implemented by means of a specific connector of the type described in the EP 06014030.8 patent application number of the same Applicant.

The keypad 109 comprises at least one button 31, 32 coupled to a respective elastically deformable surface portion 24, 25 and comprising a pin 33 inserted into an opening 34 of the socket.

The showerhead 1 according to the present invention provides for the body 2 to be bayonet-fitted into the diffuser 106. In particular, an end portion 111 of the body 2, comprising the outlets 4, 5, is associated and fitted into the portion 112 of the diffuser 106 in such manner that the outlets 4, 5 of the body 2 convey the water coming from the distribution chamber 3 inside the diffuser 106 and towards the respective delivery zones 7, 8.

A sealing gasket is inserted into a further annular seat of the body 2 for sealing with the diffuser 106, preventing water from seeping from the diffuser 106 into the portion of the body 2 not inserted into the diffuser 106.

The assembly of the body 2 with the diffuser 106 and the casing 13 is extremely simple.

As a matter of fact the end portion 111 of the body 2 is bayonet-fitted into the portion 112 of the diffuser 106 and it allows self-centring of outlets 4, 5 of the body 2 towards the respective delivery zones 7, 8 of the diffuser 106.

The end portion 111 of the body 2 and the portion 112 of the diffuser 106 are fixed through a pin 35 passing through respective holes of the end potion 111 and of the portion 112 of the diffuser 106 which are already aligned at the self-centring position.

The diffuser 106 and the body 2 comprise guides 36 and the casing 13 comprises the respective slides 37 for proper positioning of the casing 13 onto the diffuser 106 and onto the body 2. In particular, when mounting the showerhead 1, the slides 37 of the casing 13 are channelled in the respective guides 36 of the body 2 and of the diffuser 106. In this manner, the casing 13, fitted onto the portion 112 of the diffuser 106 through the guides 36, is self-centred both with respect to the body 2, and with respect to the diffuser 106.

The elastically deformable surface portions 24, 25 of the keypad 109, in the self-centring position of the casing 13 on the body 2, are substantially at contact with the pressure sensors of the electronic board 28.

A second end portion 38 of the body 2, oppositely positioned with respect to the first end portion 111, is used for connecting the water intake pipe towards the distribution chamber 3.

The bushing 40 comprises an annular seat accommodating a gasket 41 which serves as a sealing between it and the casing 13. Also, the portion of the body 2 comprises an annular seat for a gasket fitted sealingly between the bushing 40 and the body 2.

The bushing 40 is bayonet-coupled with the body 2 and allows a particularly easy mounting of the casing 13 onto the body 2 and onto the diffuser 106. In particular, the casing 13 comprises a radial element 360 which interferes with the bushing 40, hence, when coupling the bushing 40 onto the body 2, the casing 13 is forcefully pushed with the radial element 360 perfectly adhering onto the first gasket 117 of the diffuser 106.

Further provided in the hydraulically insulated seat 6, are silicon gel cartridges which eliminate humidity completely, guaranteeing that such seat 6 is substantially in a dry environment, particularly adapted for proper operation of the electric motor 10, of the electronic board and their durability. In particular, the framework 19 comprises one or more seats 191, 192 for accommodating the silicon cartridges as represented in figure 11a.

Advantageously, the showerhead according to the present invention allows to select the delivery mode electrically and applying a slight pressure on an electric motor operating button.

Advantageously, the operating button is very small given that just a slight pressure is required to operate the electric motor.

Advantageously, the showerhead according to the present invention is small given that the electric motor is mounted with the threaded shaft inside the female screw of the guided slide and transfers the rotation movement of the shaft directly onto the slide.

## Claims

1. Showerhead (1) comprising a body (2) delimiting a distribution chamber (3) provided with a water inlet and at least two distinct outlets (4, 5), a shutter (9) axially sliding between a first seat (S1) of the distribution chamber (3), in which it interrupts a fluid path towards a first outlet(4), and a second seat (S2) of the chamber (3), in which it interrupts a fluid path towards a second outlet (5), **characterised in that** it comprises
- an electric motor (10) provided with a shaft,
- a guided slide (15) fixed to the shutter (9) and coupled to the shaft of said motor,
the coupling between the slide (15) and the shutter (9) being of the screw (11) and female screw (12) type for converting a rotation of the shaft into an axial sliding of the shutter (9).

2. Showerhead according to claim 1 **characterised in that** said screw (11) is made up of a threading of said shaft.

3. Showerhead according to claim 1 **characterised in that** said female screw (11) is made in a thickness of said guided slide (15).

4. Showerhead according to claim 1 **characterised in that** it comprises a casing (13) fitted sealingly onto said body (2) and delimiting a hydraulically sealed seat (6) for accommodating said electric motor (10).

5. Showerhead according to claim 1 **characterised in that** it comprises a rod (16) arranged between said shutter (9) and said guided slide (15), axially sliding through an access hole (17) into the distribution chamber (3).

6. Showerhead according to claim 1 **characterised in that** said body (2) comprises a guide (G) for said guided slide (15).

7. Showerhead according to claim 4 **characterised in that** it comprises a framework (19) of said electric motor (10), fixed into said hydraulically sealed seat (6).

8. Showerhead according to claim 7 **characterised in that** said framework (19) comprises a guide (G) for said guided slide (15).

9. Showerhead according to claims 8 and 6 **characterised in that** said framework (19) is hollow and said guide (G) is located along an internal surface of the framework (19).

10. Showerhead according to claim 9 **characterised in that** said framework (19) comprises a support base (B1) for the electric motor (10), provided with an opening (A1) through which the female screw (12) is engaged with the shaft.

11. Showerhead according to claims 5 and 10 **characterised in that** a base (B2) opposite to said support base (B1) comprises an opening (A2) through which said guided slide (15) and said rod (16) are axially slidable.

12. Showerhead according to claim 4 **characterised in that** it comprises an electronic boardboard (28) connected to the electric motor (10) inside the hydraulically insulated seat (6).

13. Showerhead according to claim 12 **characterised in that** said electronic board (28) comprises at least one pressure sensor (29) for operating said shaft.

14. Showerhead according to claims 4 and 5 **characterised in that** it comprises a gasket (200) provided sealed in a seat (108) substantially concentric to said access hole (17), for hydraulically insulating the distribution chamber (3) from the hydraulically insulated seat (6).
